# EUROPÄISCHE PATENTANMELDUNG

(11) **EP 3 825 259 A1**
(43) Veröffentlichungstag der Anmeldung: **26.05.2021**
(21) Anmeldenummer: 20208822.5
(22) Anmeldetag: 20.11.2020
(51) Int. Cl.: B65G 17/20, B29C 49/42, B65G 21/22

(54) **TRANSPORTEINRICHTUNG FÜR PREFORMS**

(30) Priorität: 21.11.2019 DE 102019131542
(71) Anmelder: KHS Corpoplast GmbH, 22145 Hamburg (DE)
(72) Erfinder: Lewin, Frank, 22889 Tangstedt (DE); Ulutürk, Deniz, 22761 Hamburg (DE); Linke, Michael, 22159 Hamburg (DE); Firchau, Daniel, 23911 Schmilau (DE); Klöpper, Gerhard, 22391 Hamburg (DE); Choinski, Julian, 22359 Hamburg (DE)
(74) Vertreter: Greiche, Albert

(57) **Zusammenfassung**

Es wird eine Einrichtung zum Transport von Preforms (Vorformlinge) mittels einer Förderkette (51) mit Kettengliedern beschrieben, an denen jeweils ein sich auf einer ersten Seite der Förderkette (51) erstreckender Ausleger (511) zum Halten von mindestens einer Preform befestigt ist, und zwar zum Transport entlang eines Transportweges, der mindestens eine geradlinige Führungsbahn (71) und mindestens eine in Richtung der gegenüber liegenden zweiten Seite der Förderkette (51) gekrümmte Führungsbahn (52) aufweist. Um die mit dem Übergang zwischen einer geradlinigen und einer gekrümmten Führungsbahn verbundenen und insbesondere bei hohen Fördergeschwindigkeiten auf die Preforms einwirkenden Beschleunigungen und Verzögerungen zu vermindern, ist dieser Übergang durch einen Übergangsabschnitt (K) gebildet, der sich tangential an die geradlinige Führungsbahn (71) anschließt und dessen Krümmungsradius sich stetig auf den Krümmungsradius der gekrümmten Führungsbahn (52) verkleinert, wobei die Länge des Übergangsabschnitts so bemessen ist, dass die durch den sich stetig verkleinernden Krümmungsradius verursachte Vergrößerung der Winkelgeschwindigkeit der Ausleger (511) einen vorbestimmten ersten Grenzwert nicht überschreitet.

## Beschreibung

Die Erfindung betrifft eine Einrichtung zum Transport von Preforms (Vorformlinge), die eine Förderkette mit Kettengliedern aufweist, an denen jeweils ein sich auf einer ersten Seite der Förderkette erstreckender Ausleger zum Halten von mindestens einer Preform befestigt ist, und die zum Transport der Preforms entlang eines Transportweges vorgesehen ist, der mindestens eine geradlinige Führungsbahn und mindestens eine in Richtung der gegenüber liegenden zweiten Seite der Förderkette gekrümmte Führungsbahn aufweist. Die Transporteinrichtung dient zum Transport der Preforms zum Beispiel durch eine Heizvorrichtung oder durch andere Teile einer Blasmaschine zur Herstellung von Behältern aus thermoplastischem Material. Die Erfindung betrifft auch eine Blasmaschine mit einer solchen Transporteinrichtung.

Eine Transporteinrichtung zum Transport von Preforms durch eine Heizvorrichtung ist aus der EP 3 284 579 bekannt. Diese Transporteinrichtung weist eine Förderkette mit einer Mehrzahl von Kettengliedern auf, an denen jeweils ein sich auf einer ersten Seite der Förderkette erstreckender Ausleger mit jeweils einem Haupt- und einem Schwenkarm befestigt ist, an dem wiederum jeweils zwei Preforms gehalten werden. Die Haupt- und Schwenkarme sind so miteinander gekoppelt und verschwenkbar, dass bei einer geradlinigen Führungsbahn der Förderkette die Preforms in zwei parallel nebeneinander liegenden Reihen und bei einer in Richtung der gegenüber liegenden zweiten Seite der Förderkette gekrümmten, insbesondere kreisbogenförmigen Führungsbahn der Förderkette die Preforms in einer einzigen Reihe transportiert werden.

Ein einreihiger Transport der Preforms hat zum Beispiel bei der Übergabe und der Entnahme der Preforms in die bzw. aus der Transporteinrichtung sowie dann Vorteile, wenn die Preforms mittels einer seitlich angeordneten Inspektionseinrichtung geprüft werden sollen. Ein zweireihiger Transport hat zum Beispiel bei der Führung durch eine Heizvorrichtung den Vorteil, dass die Heizvorrichtung kompakter gestaltet und mit zwei Heizgassen versehen werden kann, wodurch thermische Verluste vermindert werden.

Allerdings hat es sich gezeigt, dass bei einem Übergang von einer gekrümmten Führungsbahn zu einer geradlinigen Führungsbahn der Förderkette und umgekehrt insbesondere bei hohen

Fördergeschwindigkeiten im Bereich von zum Beispiel etwa 0,2 bis 0,8 Meter pro Sekunde oder mehr durch die mit diesen Übergängen verbundenen Beschleunigungen und Verzögerungen hohe Massenkräfte und stoß- oder ruckartige Belastungen auf die Komponenten der Transporteinrichtung und insbesondere die Haupt- und Schwenkarme der Ausleger sowie auf die Preforms ausgeübt werden, die einen störanfälligen Betrieb, einen hohen Verschleiß und auch Schwingungen der Förderkette zur Folge haben können.

Eine der Erfindung zugrunde liegende Aufgabe besteht deshalb darin, eine Transporteinrichtung der eingangs genannten Art zu schaffen, mit der die insbesondere an den Übergängen zwischen einer gekrümmten Führungsbahn und einer geradlinigen Führungsbahn und umgekehrt auftretenden Beschleunigungen und Verzögerungen sowie die damit verbundenen, auf Komponenten der Transporteinrichtung sowie die Preforms einwirkenden stoß- oder ruckartigen Kräfte oder Schwingungen zumindest wesentlich vermindert werden können.

Gelöst wird diese Aufgabe mit einer Transporteinrichtung gemäß Anspruch 1.

Demnach wird bei einer solchen Transporteinrichtung ein Übergang zwischen einer geradlinigen Führungsbahn (d.h. einer Führungsbahn mit unendlichem Krümmungsradius) und einer gekrümmten Führungsbahn mit einem endlichen, insbesondere konstanten Krümmungsradius durch einen Übergangsabschnitt der Führungsbahn gebildet, der sich tangential an die geradlinige Führungsbahn anschließt und dessen Krümmungsradius sich stetig von dem (unendlichen) Krümmungsradius der geradlinigen Führungsbahn auf den (endlichen) Krümmungsradius der gekrümmten Führungsbahn verkleinert, wobei die Länge des Übergangsabschnitts so bemessen ist, dass die durch den sich stetig verändernden Krümmungsradius verursachte Veränderung der Winkelgeschwindigkeit (Schwenkbewegung) der Ausleger einen vorbestimmten ersten Grenzwert nicht überschreitet.

Die erfindungsgemäße Lösung ist vorteilhaft in den Abschnitten des Transportweges anwendbar, in denen die (Endlos-) Förderkette über ein Antriebsritzel läuft, sowie an anderen Stellen, an denen bei einer zum Beispiel aus der eingangs genannten EP 3 284 579 bekannten Transporteinrichtung mittels eines Umlenk-Zahnrades ein Übergang zwischen einem einreihigen und einem zweireihigen Transport der Preforms bzw. (je nach Transportrichtung) umgekehrt geschaffen wird.

Ein besonderer Vorteil dieser Lösung besteht darin, dass höhere Fördergeschwindigkeiten der Förderkette ermöglicht werden, ohne dass die oben genannten Probleme bei einem Übergang von einer geradlinigen auf eine gekrümmte Führungsbahn und umgekehrt zu befürchten sind.

Zwar sind aus der DE 10 2017 112 220 und der EP 0 554 551 Kettenführungen bekannt, bei denen bei einem Richtungswechsel der Führungsbahn bzw. einer Kettenumlenkung Übergangskurven vorgesehen sind, deren Krümmungsradius sich stetig ändert. Dieser Stand der Technik wird jedoch nicht als einschlägig angesehen, da die der Erfindung zugrunde liegende Problematik im Zusammenhang mit den an den Kettengliedern befestigten Auslegern, an denen wiederum jeweils mindestens eine Preform befestigt ist, dort nicht behandelt wird.

Die abhängigen Ansprüche haben vorteilhafte Weiterbildungen der Erfindung zum Inhalt.

Demnach kann die Länge des Übergangsabschnitts auch so bemessen sein, dass die durch den sich stetig verändernden Krümmungsradius verursachte Differenz zwischen den Winkelgeschwindigkeiten benachbarter Hauptarme einen vorbestimmten zweiten Grenzwert nicht überschreitet.

Insbesondere wird die Länge des Übergangsabschnitts in Abhängigkeit von der Höhe der gewünschten Fördergeschwindigkeit der Förderkette bemessen, d.h. die Länge wird umso größer gewählt, je größer die Fördergeschwindigkeit sein soll.

Weiterhin kann die Länge des Übergangsabschnitts auch in Abhängigkeit von der Länge der Ausleger bemessen werden, d.h. je länger die Ausleger sind, desto länger wird auch der Übergangsabschnitt gewählt, um den genannten Grenzwert nicht zu überschreiten.

Diese verschiedenen Möglichkeiten zur Bemessung der Länge des Übergangsabschnitts können alternativ oder in Kombination miteinander gewählt und zum Beispiel in Abhängigkeit von den konstruktiven Gegebenheiten der Transporteinrichtung und den Anforderungen an einen möglichst ruck- und stoßfreien Transport der Preforms realisiert werden.

Weitere Einzelheiten, Merkmale und Vorteile der Erfindung ergeben sich aus der folgenden Beschreibung von bevorzugten Ausführungsformen und anhand der Zeichnungen. Es zeigt:
Fig. 1 eine schematische Ansicht des grundsätzlichen Aufbaus einer Blasmaschine mit einer Transporteinrichtung;
Fig. 2 eine dreidimensionale Ansicht eines Teilbereiches einer Förderkette mit Kettengliedern und Auslegern;
Fig. 3 eine schematische Draufsicht auf einen Teilbereich der Förderkette mit Kettengliedern und Auslegern;
Fig. 4 zwei Kettenglieder mit Hauptarmen in einer Stellung bei zweireihigem Transport von Preforms;
Fig. 5 zwei Kettenglieder mit Hauptarmen in einer Stellung bei einreihigem Transport von Preforms;
Fig. 6 zwei Kettenglieder mit Hauptarmen in einer Stellung im Übergangsbereich zwischen ein- und zweireihigen Transport von Preforms;
Fig. 7 eine Darstellung der Führungsbahn einer Förderkette mit einem Übergangsabschnitt für den Übergang zwischen ein- und zweireihigem Transport von Preforms;
Fig. 8 eine seitliche Ansicht auf eine bevorzugte Ausführungsform zur Erzeugung der in Figur 7 gezeigten Führungsbahn;
Fig. 9 eine Ansicht auf die Ausführungsform gemäß Figur 8 von schräg oben; und
Fig. 10 eine Ansicht auf die Ausführungsform gemäß Figur 8 von schräg unten.

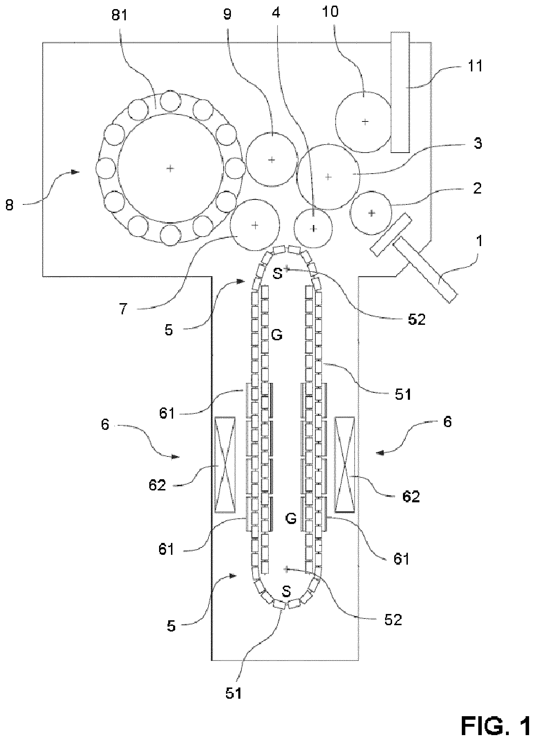

Figur 1 zeigt schematisch den prinzipiellen Aufbau einer aus der EP 3 284 579 bekannten Blasmaschine.

Die Blasmaschine umfasst eine Eingabe 1 für die Preforms sowie ein erstes, ein zweites und ein drittes Übergaberad 2, 3, 4, mittels derer die Preforms an eine Transporteinrichtung 5 übergeben werden. Die Transporteinrichtung 5 umfasst eine Förderkette 51, die umlaufend ("Endlos-Förderkette") um mindestens zwei Umlenkräder 52 (Zahnräder) geführt ist und beispielhaft im Bereich der Umlenkräder 52 jeweils eine gekrümmte erste und zweite Führungsbahn S aufweist, entlang der die Preforms aufeinander folgend in einer einzigen Reihe geführt werden, sowie dazwischen jeweils eine geradlinige dritte und vierte Führungsbahn G umfasst, entlang derer die Preforms in zwei parallel nebeneinander verlaufenden Reihen transportiert werden.

Entlang der geradlinigen dritten und vierten Führungsbahn G der Förderkette 51 ist beispielhaft jeweils eine an sich bekannte Heizeinrichtung 6 angeordnet, die jeweils einen oder mehrere Heizstrahler 61 beiderseits der Förderkette 51 sowie jeweils ein oder mehrere Gebläse 62 aufweist.

Nachdem die Preforms mittels der Förderkette 51 durch die Heizeinrichtungen 6 geführt wurden, werden sie mittels eines vierten Übergaberades 7 von der Förderkette 51 an ein rotierendes Blasrad 81 einer Blasstation 8 übergeben, wo sie in bekannter Weise zu Behältern expandiert bzw. aufgeblasen werden. Mittels eines fünften Übergaberades 9 (Entnahmerad), des zweiten Übergaberades 3 sowie eines sechsten Übergaberades 10 (Ausgaberad) werden die Behälter schließlich einer Ausgabestrecke 11 zugeführt.

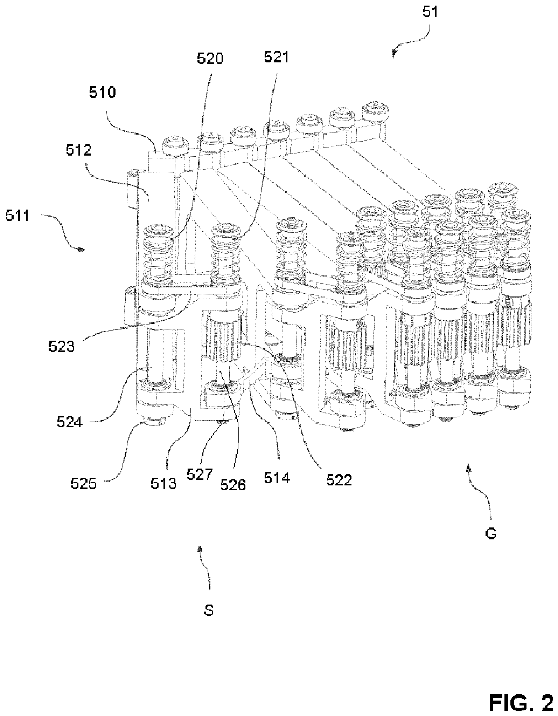

Figur 2 zeigt eine dreidimensionale Ansicht eines Teilbereiches der Förderkette 51 der Transporteinrichtung 5, und zwar im Bereich des Übergangs zwischen einer geradlinigen Führungsbahn G und einer gekrümmten Führungsbahn S der Förderkette 51.

Die Förderkette 51 ist durch eine Anzahl von Kettengliedern 510 gebildet, die jeweils beidseitig zwei Gelenke zur gelenkigen Verbindung mit beiderseits jeweils einem benachbarten Kettenglied aufweisen.

Außerdem ist an jedem Kettenglied 510 ein sich auf einer ersten Seite der Förderkette 51 erstreckender Ausleger 511 angeordnet, der einen mit einem ersten Ende an einem Kettenglied 510 befestigten Hauptarm 512 sowie einen mit dem gegenüber liegenden zweiten Ende gelenkig verbundenen Schwenkarm 513 aufweist. An dem zweiten Ende des Hauptarms 512 befindet sich ferner ein erster Haltedorn 524, der an seinem oberen Ende mittels einer ersten Feder 520 in Axialrichtung vorgespannt ist. An seinem unteren Ende befindet sich ein erster Haltekopf 525 für eine Preform. Der Schwenkarm 513 trägt einen zweiten Haltedorn 526, der an seinem oberen Ende mittels einer zweiten Feder 521 in Axialrichtung vorgespannt ist und an seinem unteren Ende einen zweiten Haltekopf 527 für eine Preform aufweist.

Zur Übertragung von Drehbewegungen der Preforms weisen die zweiten Haltedorne 526 der Ausleger 511 zahnkranzähnliche Koppelelemente 522 auf, die im Bereich der zweireihigen Führung (geradliniger Verlauf der Förderkette 51) miteinander eingreifen. Die Übertragung der Drehbewegung auf den ersten Haltedorn 524 erfolgt dabei mittels eines Riemens 523.

Der Schwenkarm 513 jedes Auslegers 511 ist schließlich mittels einer Koppelstange 514 mit dem zweiten Ende des jeweils benachbarten Hauptarms 512 verbunden, so dass beim Übergang von einer geradlinigen Führungsbahn G auf eine in Richtung der den Auslegern 511 gegenüber liegenden zweiten Seite der Förderkette 51 gekrümmten Führungsbahn S der Förderkette 51 die Schwenkarme 513 und damit auch die Preforms von der zweireihigen Führung zu einer einreihigen Führung entfaltet werden.

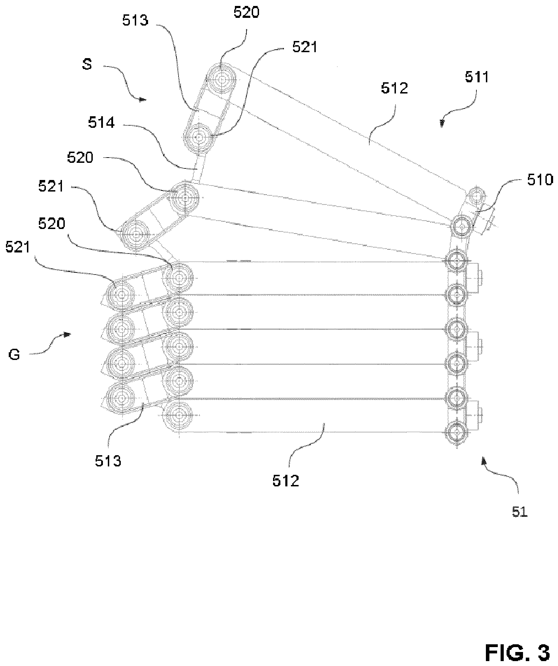

Figur 3 zeigt eine schematische Draufsicht auf einen Teilbereich der Förderkette 51 mit Kettengliedern 510 und Auslegern 511, und zwar ebenfalls im Bereich des Übergangs zwischen einer geradlinigen Führungsbahn G und einer gekrümmten Führungsbahn S der Förderkette 51.

Gleiche Bezugsziffern wie in Figur 2 bezeichnen jeweils gleiche Elemente wie in Figur 2, so dass auf eine erneute Erläuterung verzichtet werden kann. Aus dieser Figur wird noch einmal der zweireihige Transport der koaxial zu den Federn 520, 521 gehaltenen Preforms (geradlinige Führungsbahn G der Förderkette 51) im Vergleich zu dem einreihigen Transport (gekrümmte Führungsbahn S der Förderkette 51) sowie der Übergang zwischen beiden deutlich, in dem die Schwenkarme 513 und damit auch die Preforms mittels der sich auslenkenden Koppelstangen 514 von der zweireihigen Führung zu einer einreihigen Führung entfaltet werden.

Zu den weiteren Einzelheiten im Hinblick auf die Elemente, Abläufe und Funktionen wird auf die oben schon genannte EP 3 284 579 Bezug genommen.

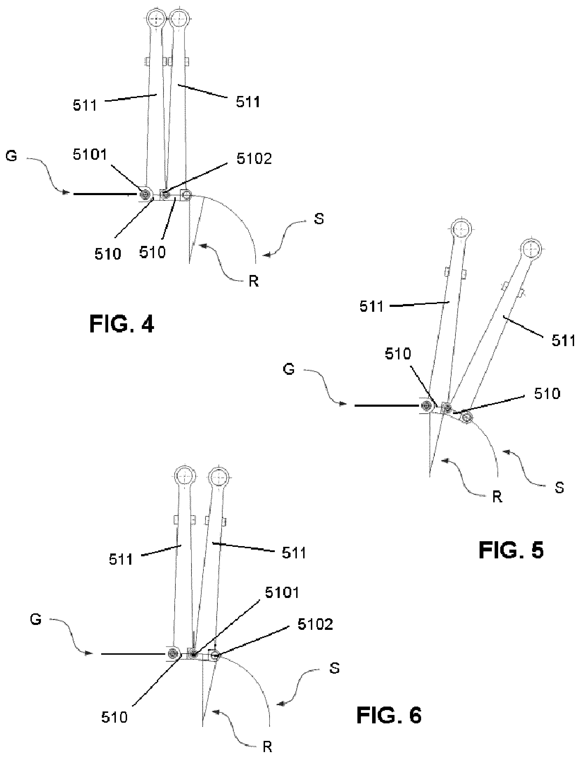

Die Figuren 4 bis 6 verdeutlichen die der Erfindung zugrunde liegende Problematik bei einem Übergang zwischen einem geradlinigen und einem gekrümmten, hier kreisbogenförmigen Verlauf (Führungsbahn) der Förderkette 51.

Diese Figuren zeigen jeweils zwei Kettenglieder 510 mit jeweils einem daran befestigten Ausleger 511, an dem mindestens eine Preform (nicht dargestellt) gehalten wird. Jedes Kettenglied 510 weist ein erstes und ein zweites Gelenk 5101, 5102 auf, die in Transport- bzw. Laufrichtung der Förderkette 51 voneinander beabstandet sind und jeweils zur gelenkigen Verbindung mit jeweils einem benachbarten, vor- und nachlaufenden Kettenglied 510 dienen.

Figur 4 zeigt den Fall, in dem sich die beiden Gelenke 5101, 5102 der beiden dargestellten Kettenglieder 510 in einem geradlinigen Abschnitt G der Führungsbahn befinden, in dem die benachbarten Ausleger 511 im Wesentlichen parallel zueinander verlaufen. Figur 5 zeigt den Fall, in dem sich die beiden Gelenke 5101, 5102 beider Kettenglieder 510 in einem gekrümmten, hier kreisbogenförmigen Abschnitt S der Führungsbahn befinden, in dem die benachbarten Ausleger 511 einen dem Krümmungsradius R des gekrümmten oder kreisbogenförmigen Abschnitts S entsprechenden Winkel > 0 einschließen.

Figur 6 zeigt schließlich den Fall, in dem sich das erste Gelenk 5101 eines der Kettenglieder auf dem geradlinigen Abschnitt G und das zweite Gelenk 5102 dieses Kettengliedes auf dem gekrümmten Abschnitt S der Führungsbahn befindet, während das benachbarte Kettenglied mit beiden Gelenken auf dem geradlinigen Abschnitt G liegt. In dieser Übergangsphase führen die beiden Ausleger 511 eine Schwenkbewegung relativ zueinander aus, bis - je nach Transportrichtung - die in Figur 4 oder Figur 5 gezeigte Position erreicht und damit die Übergangsphase für diese beiden Kettenglieder beendet ist.

Innerhalb der Übergangsphase verändert sich somit während des Transportes die Winkelgeschwindigkeit der Ausleger 511. Insbesondere vergrößert sich zunächst der Winkel zwischen den Auslegern 511 benachbarter Kettenglieder 510, bis beide Gelenke 5101, 5102 eines Kettengliedes auf dem gekrümmten Abschnitt S und beide Gelenke 5101, 5102 des benachbarten Kettengliedes auf dem geradlinigen Abschnitt G des Transportweges liegen. Im Zuge des weiteren Transports verkleinert sich der Winkel wieder - je nach Transportrichtung - auf den in den Figuren 4 oder 5 dargestellten Wert.

Durch diese sich verändernde Winkelgeschwindigkeit der Ausleger bzw. den sich zunächst vergrößernden und dann wieder verkleinernden Winkel zwischen benachbarten Auslegern 511 können innerhalb der genannten Übergangsphase insbesondere bei höheren Transportgeschwindigkeiten und insbesondere im Zusammenhang mit der in Figur 2 und Figur 3 gezeigten Konfiguration der Ausleger 511 mit Haupt- und Schwenkarmen 512, 513 sowie der Koppelstange 514 durch die Beschleunigungen und Verzögerungen erhebliche Kräfte auf die Komponenten der Transporteinrichtung und die damit geförderten Preforms ausgeübt werden, die, wie eingangs erläutert, nachteilig sind.

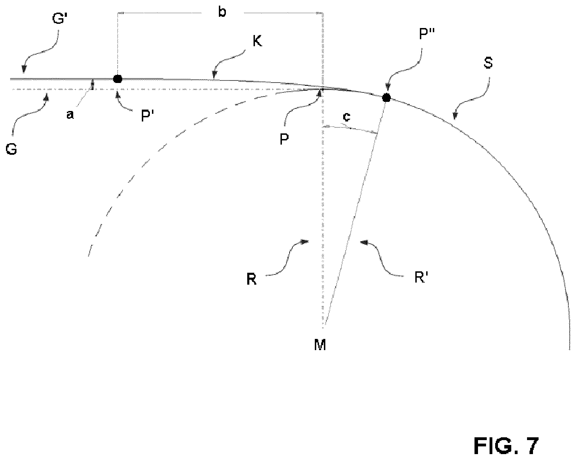

Mit der in Figur 7 gezeigten Gestaltung der Führungsbahn der Förderkette 51 können diese Kräfte und Schwingungen zumindest wesentlich reduziert werden. Zu diesem Zweck wird ein Übergangsabschnitt K in die Führungsbahn eingebracht, der sich zwischen dem geradlinigen und dem gekrümmten, insbesondere kreisbogenförmigen Verlauf der Führungsbahn G; S erstreckt und beide miteinander verbindet. Dieser Übergangsabschnitt K erstreckt sich somit gemäß Figur 7 zwischen einem ersten Übergangspunkt P' und einem zweiten Übergangspunkt P".

Der Krümmungsradius des Übergangsabschnitts K ist an dem ersten Übergangspunkt P' entsprechend der geradlinigen Führungsbahn G' unendlich, d.h. der Übergangsabschnitt K schließt sich an dem ersten Übergangspunkt P' tangential an die geradlinige Führungsbahn G' an. Von dort verkleinert sich der Krümmungsradius vorzugsweise stetig bis zum zweiten Übergangspunkt P", an dem der Krümmungsradius R' demjenigen der gekrümmten bzw. kreisbogenförmigen Führungsbahn S entspricht und somit in diesen übergeht, so dass die Förderkette 51 auf dem betreffenden Umlenkrad 52 (hier durch die kreisbogenförmige Führungsbahn S angedeutet) zu liegen kommt.

In Abhängigkeit von der Länge des Übergangsabschnitts K zwischen dem ersten und dem zweiten Übergangspunkt P', P", dem gewählten Krümmungsverlauf entlang dieser Länge sowie dem Radius R' der gekrümmten Führungsbahn S ist die sich bis zu dem ersten Übergangspunkt P' erstreckende geradlinige Führungsbahn G (d.h. diejenige geradlinige Führungsbahn, die sich ergeben würde, wenn diese unmittelbar, d.h. ohne den Übergangsabschnitt K, an dem ursprünglichen Übergangspunkt P in die gekrümmte Führungsbahn S übergehen würde) in ihrem Verlauf bis zu dem ersten Übergangspunkt P' um einen Abstand a in radialer Richtung der gekrümmten bzw. kreisbogenförmigen Führungsbahn S nach außen parallel verschoben. Dadurch ergibt sich die in Figur 7 gezeigte, parallel verschobene geradlinige Führungsbahn G'.

Die Veränderung des Krümmungsradius (d.h. dessen Verkleinerung von unendlich auf den Wert der kreisbogenförmigen Führungsbahn S) kann zum Beispiel entsprechend dem Krümmungsverlauf eines Abschnitts einer Klothoide oder eines Blossbogens oder in anderer Weise erfolgen.

Daraus ergibt sich gemäß Figur 7, dass der erste Übergangspunkt P' gegenüber dem ursprünglichen Übergangspunkt P um eine Distanz b in Richtung der geradlinigen Führungsbahn G' verschoben ist, während der zweite Übergangspunkt P" um einen Mittelpunktswinkel c gegenüber dem ursprünglichen Übergangspunkt P in Umfangsrichtung der kreisbogenförmigen Führungsbahn S versetzt ist.

Die Länge P'-P" des Übergangsabschnitts K wird in Abhängigkeit von dem Krümmungsradius R' der kreisbogenförmigen Führungsbahn S so bemessen, dass die durch den sich stetig verkleinernden Krümmungsradius verursachte Vergrößerung der Winkelgeschwindigkeit der Ausleger 511 einen vorbestimmten ersten Grenzwert nicht überschreitet.

Alternativ dazu kann die Länge P'-P" des Übergangsabschnitts K auch so bemessen werden, dass die durch den sich stetig verkleinernden Krümmungsradius verursachte Differenz zwischen den Winkelgeschwindigkeiten benachbarter Ausleger 511 einen vorbestimmten zweiten Grenzwert nicht überschreitet.

Diese Grenzwerte werden in Abhängigkeit von den konstruktiven Gegebenheiten der Transporteinrichtung (zum Beispiel der Länge der Ausleger 511) so bemessen, dass die gestellten Anforderungen an einen möglichst ruck- und stoßfreien Transport der Preforms erfüllt werden. Typische Werte für die in Figur 7 gezeigten Parameter sind im Fall eines Umlenkrades 52 mit einem Radius R von zwischen etwa 200 und 500 mm: a = 1 bis 5 mm, wobei dieser Wert vorzugsweise in Abhängigkeit von dem Radius des Umlenkrades und dessen Zahnteilung, zum Beispiel bei einer Teilung von 37,7 zu etwa 1,25 mm, gewählt wird. Der Abstand b wird ebenfalls vorzugsweise in Abhängigkeit von der Zahnteilung des Umlenkrades 52 gewählt und beträgt zum Beispiel etwa das ein- bis dreifache dieser Teilung, vorzugsweise 2,25 * Teilung. Der Winkel c beträgt etwa 10° bis 30° und wird vorzugsweise in Abhängigkeit von der Anzahl der Kettenglieder auf dem Umlenkrad 52 gewählt.

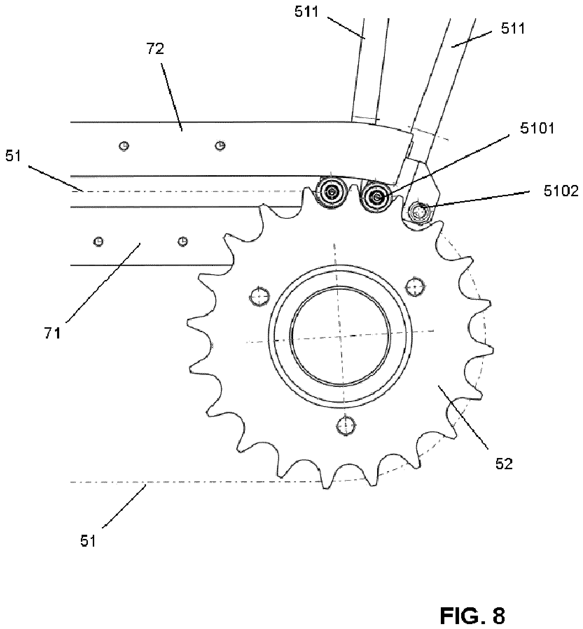

Ein solcher oder ähnlicher Verlauf der Förderkette 51 wird durch Anordnung von mindestens einem Führungsmittel für die Förderkette 51 im Bereich des Übergangsabschnitts K erreicht. Solche Führungsmittel sind beispielhaft in den Figuren 8 bis 10 dargestellt.

Figur 8 zeigt eine Seitenansicht auf ein Umlenkrad 52 in Form eines Zahnrades, um das eine nur schematisch angedeutete Förderkette 51 geführt wird. Es sind wiederum zwei Kettenglieder mit den beiden Gelenken 5101, 5102 dargestellt, an denen jeweils ein Ausleger 511 zum Halten von mindestens einer Preform befestigt ist.

Ferner sind in dieser Figur beispielhaft ein in Radialrichtung des Umlenkrades 52 erstes inneres und ein zweites äußeres Führungsmittel 71, 72 dargestellt, zwischen denen die Förderkette 51 geführt wird und deren der Förderkette 51 zugewandte Führungskanten einen dem oben beschriebenen Übergangsabschnitt K entsprechenden Krümmungsverlauf aufweisen, so dass die Förderkette 51 in der oben beschriebenen Weise in dem Übergangsabschnitt K zwischen dem ersten und dem zweiten Übergangspunkt P', P" geführt wird.

Die Führungsmittel 71, 72 können zum Beispiel in Form von zwei einander gegenüber liegenden Führungsblechen oder Führungsschienen realisiert werden oder auch ein einteiliges Führungsmittel darstellen, in das die genannte Führungsbahn für die Förderkette 51 in Form eines Führungsspaltes eingearbeitet ist.

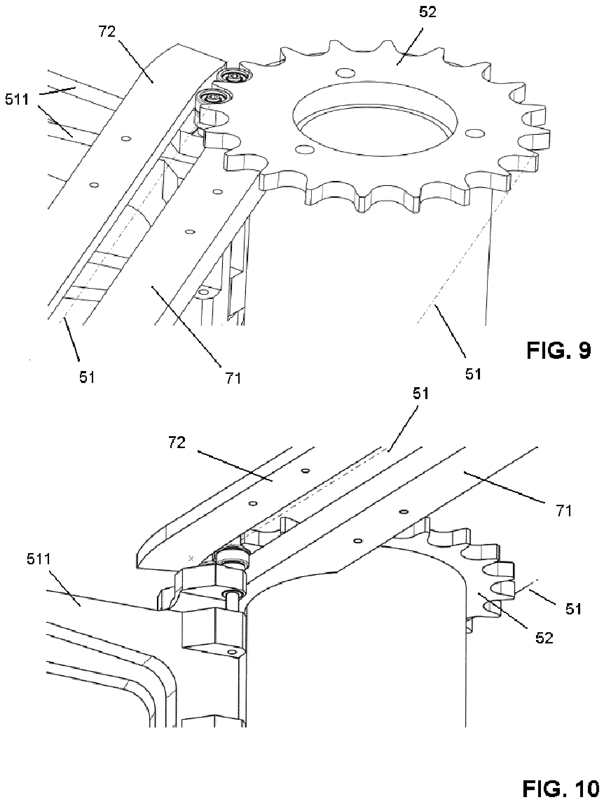

Figur 9 zeigt eine Ansicht auf die Ausführungsform gemäß Figur 8 von schräg oben, während in Figur 10 eine Ansicht von schräg unten dargestellt ist. Gleiche Komponenten wie in Figur 8 sind mit jeweils gleichen Bezugsziffern bezeichnet.

Auch in diesen Darstellungen sind das Umlenkrad 52 sowie das in Radialrichtung des Umlenkrades 52 erste innere und zweite äußere Führungsmittel 71, 72 gezeigt. Dabei erstreckt sich das erste innere Führungsmittel 71 bis hinter das Umlenkrad 52 und das zweite äußere Führungsmittel 72 entlang eines Teil des Umfangs des Umlenkrades 52, um auf diese Weise insbesondere bei hohen Fördergeschwindigkeiten einen sicheren und dem Krümmungsverlauf des Übergangsabschnitts K möglichst genau folgenden Einlauf der Förderkette 51 in das Umlenkrad 52 zu gewährleisten.

## Patentansprüche

1. Transporteinrichtung für Preforms, die eine Förderkette (51) mit Kettengliedern (510) aufweist, an denen jeweils ein sich auf einer ersten Seite der Förderkette (51) erstreckender Ausleger (511) zum Halten von mindestens einer Preform befestigt ist, zum Transport der Preforms entlang eines Transportweges, der mindestens eine geradlinige Führungsbahn (G) und mindestens eine in Richtung der gegenüber liegenden zweiten Seite der Förderkette (51) gekrümmte Führungsbahn (S) aufweist, **dadurch gekennzeichnet, dass** ein Übergang zwischen einer geradlinigen Führungsbahn (G) und einer gekrümmten Führungsbahn (S) durch einen Übergangsabschnitt (K) der Führungsbahn gebildet ist, der sich tangential an die geradlinige Führungsbahn (G) anschließt und dessen Krümmungsradius sich stetig auf den Krümmungsradius (R) der gekrümmten Führungsbahn (S) verkleinert, wobei die Länge (P'-P") des Übergangsabschnitts (K) so bemessen ist, dass die durch den sich stetig verändernden Krümmungsradius verursachte Veränderung der Winkelgeschwindigkeit der Ausleger (511) einen vorbestimmten ersten Grenzwert nicht überschreitet.

2. Transporteinrichtung nach Anspruch 1,
bei der die geradlinige Führungsbahn (G) um einen Abstand (a) in radialer Richtung der gekrümmten Führungsbahn (S) nach außen parallel verschoben ist, und wobei sich der Übergangsabschnitt (K) zwischen einem ersten Übergangspunkt (P') zu der parallel verschobenen geradlinigen Führungsbahn (G') und einem zweiten Übergangspunkt (P") zu der gekrümmten Führungsbahn (S) erstreckt.

3. Transporteinrichtung nach Anspruch 1,
bei der die Länge (P'-P") des Übergangsabschnitts (K) so bemessen ist, dass die durch den sich stetig verändernden Krümmungsradius verursachte Differenz zwischen den Winkelgeschwindigkeiten benachbarter Ausleger (511) einen vorbestimmten zweiten Grenzwert nicht überschreitet.

4. Transporteinrichtung nach Anspruch 1,
bei der die Länge (P'-P") des Übergangsabschnitts (K) in Abhängigkeit von der Höhe der Fördergeschwindigkeit der Förderkette (51) bemessen ist.

5. Transporteinrichtung nach Anspruch 1,
bei der die Länge (P'-P") des Übergangsabschnitts (K) in Abhängigkeit von der Länge der Ausleger (511) bemessen ist.

6. Transporteinrichtung nach Anspruch 1,
bei der die gekrümmte Führungsbahn (S) eine kreisbogenförmige Führungsbahn mit einem Krümmungsradius (R') ist.

7. Transporteinrichtung nach Anspruch 6,
mit einem ersten, radial inneren Führungsmittel (71), das in dem Übergangsabschnitt (K) angeordnet ist und eine Führungskante aufweist, auf der die Förderkette (51) geführt wird, wobei die Führungskante einen dem Übergangsabschnitt (K) entsprechenden Krümmungsverlauf aufweist.

8. Transporteinrichtung nach Anspruch 7,
mit einem zweiten, radial äußeren Führungsmittel (72), das gegenüber dem ersten inneren Führungsmittel (71) so angeordnet ist, dass die Förderkette (51) in einem zwischen dem ersten inneren Führungsmittel (71) und dem zweiten äußeren Führungsmittel (72) gebildeten Führungsspalt geführt wird.
